# EUROPÄISCHE PATENTSCHRIFT

(11) **EP 3 818 798 B1**
(45) Veröffentlichungstag und Bekanntmachung des Hinweises auf die Patenterteilung: **03.07.2024**
(21) Anmeldenummer: 20205744.4
(22) Anmeldetag: 04.11.2020
(51) Int. Cl.: A01B 59/06, A01B 71/06, A01D 75/30

(54) **ANBAUVORRICHTUNG ZUM ANBAUEN VON MINDESTENS ZWEI LANDWIRTSCHAFTLICHEN ARBEITSMASCHINEN AN EINE ZUGMASCHINE SOWIE ARBEITSZUG MIT DER ZUGMASCHINE, DER ANBAUVORRICHTUNG UND DEN LANDWIRTSCHAFTLICHEN ARBEITSMASCHINEN**
ATTACHMENT DEVICE FOR ATTACHING AT LEAST TWO AGRICULTURAL WORK IMPLEMENTS TO A TRACTOR AND WORK TRAIN WITH THE TRACTOR, THE ATTACHMENT DEVICE AND THE AGRICULTURAL WORK IMPLEMENTS
DISPOSITIF DE MONTAGE POUR MONTER AU MOINS DEUX MACHINES DE TRAVAIL AGRICOLE À UN TRACTEUR AINSI QUE TRAIN DE TRAVAUX POURVU DE TRACTEUR, DE DISPOSITIF DE MONTAGE ET DE MACHINES DE TRAVAIL AGRICOLE

(30) Priorität: 08.11.2019 DE 102019007751
(43) Veröffentlichungstag der Anmeldung: 12.05.2021
(73) Patentinhaber: Maschinenfabrik Bernard Krone GmbH & Co. KG, 48480 Spelle (DE)
(72) Erfinder: Lömker, Jens, 48496 Hopsten (DE)

(56) Entgegenhaltungen:
- DE-A1- 10 121 014
- DE-T2- 68 913 786
- DE-U1- 29 707 139

## Beschreibung

Die vorliegende Erfindung betrifft eine Anbauvorrichtung, die eine Anbauanordnung zum Anbauen an ein Standard- Heckhubwerk einer Zugmaschine sowie ein zentrales Verteilergetriebe aufweist, das einen Antrieb zum Anschließen an eine Triebwelle der Zugmaschine und mindestens zwei Abtriebe aufweist, wobei die Anbauvorrichtung zudem mindestens eine erste und eine zweite Anhänganordnung aufweist, die zum Anhängen einer Standard- Kupplungsanordnung der landwirtschaftlichen Arbeitsmaschine im Feldbetrieb vorgesehen sind. Die vorliegende Erfindung betrifft weiterhin eine Anbauvorrichtung, bei der die Anbauanordnung in eine Erstreckungsrichtung ausgerichtet ist, und die Anhänganordnungen jeweils seitlich der Anbauanordnung angeordnet sind. Die vorliegende Erfindung betrifft weiterhin einen Arbeitszug mit einer Zugmaschine, die im heckseitigen Anbauraum ein Standard- Heckhubwerk aufweist, mit einer landwirtschaftlichen Arbeitsmaschine, und mit einer solchen Anbauvorrichtung, die an das Standard- Heckhubwerk der Zugmaschine angebaut ist, wobei die landwirtschaftliche Arbeitsmaschine an die Anbauvorrichtung angehängt ist.

Um auf dem Feld eine größere Arbeitsbreite zu erreichen, ist es bekannt, an eine Zugmaschine mehrere landwirtschaftliche Arbeitsmaschinen an der Front- und/oder Heckseite anzuhängen. Dabei werden Anbauvorrichtungen verwendet, die an die Zugmaschine anbaubar oder anhängbar sind, und die das Anhängen von mindestens zwei oder mehr landwirtschaftlichen Arbeitsmaschinen an die Zugmaschine ermöglichen. Die Schlepper weisen dafür front- und/oder heckseitig normierte Standard- Hubwerke, s. DIN ISO 730-1, und/oder Kupplungen auf.

Die Druckschrift DE 297 07 139 U1 zeigt ein Großflächen-Mähgerät für den Anbau an einen Traktor, bei dem ein Zentralrahmen an eine Aufnahmeausbildung des Traktors anbaubar ist und an dessen dem Traktor abgewandten Rahmenbereich eine mittlere Mäheinheit und an dessen seitlichen Rahmenbereichen eine rechte und eine linke Mäheinheit angeschlossen sind. An dem Zentralrahmen ist zudem ein Verteilergetriebe mit einem Eingang und drei Ausgängen angeordnet, dessen Eingang getrieblich an die Zapfwelle des Traktors angeschlossen ist, und mit dessen Ausgängen die Mäheinheiten getrieblich in Verbindung stehen.

Auch die Druckschriften DE 689 13 786 T2 und DE 101 21 014 A1 zeigen Traktoren mit mehreren angebauten Bearbeitungsmaschinen.

Aufgabe der vorliegenden Erfindung ist es, eine kostengünstige Anbauvorrichtung bereitzustellen, die ein sehr schnelles und einfaches Anbauen von zumindest zwei landwirtschaftlichen Arbeitsmaschinen, sowie einen flexiblen Einsatz auf dem Feld ermöglicht.

Die Aufgabe wird gelöst mit einer Anbauvorrichtung mit den Merkmalen des unabhängigen Anspruchs 1 sowie einem Arbeitszug mit den Merkmalen des unabhängigen Anspruchs 14. Vorteilhafte Ausführungsformen sind den abhängigen Ansprüchen entnehmbar.

Dafür wird eine Anbauvorrichtung geschaffen. Die Anbauvorrichtung weist eine Anbauanordnung zum Anbauen an ein Standard- Heckhubwerk einer Zugmaschine, beispielsweise eines Traktors oder eines Schleppers, auf.

Dafür weist die Anbauanordnung ein Paar Anbauelemente, beispielsweise Bolzen, auf, die an Gegenanbauelementen des Standard- Heckhubwerks befestigbar sind. Solche Gegenanbauelemente sind beispielsweise Fanghaken und/oder Kugeln. Sie sind bevorzugt jeweils an einem Unterlenker des Standard- Heckhubwerks angeordnet. Die Anbauelemente können an Anbaulenkern angeordnet sein. Dabei können die Anbaulenker sich an den Unterlenkern abstützen, um ein Verkippen der Anbauvorrichtung zu verhindern. Es ist demgegenüber aber bevorzugt, dass die Anbauanordnung zudem einen Oberträger umfasst, der an einem Oberlenker des Standard- Heckhubwerks befestigbar ist. Durch Befestigen des Oberträgers am Oberlenker kann ein solches Verkippen ebenfalls vermieden werden, wobei die Anbauanordnung dieser Ausführungsform zudem einem Standard für solche Anbauanordnungen entspricht.

Weiterhin weist die Anbauvorrichtung ein zentrales Verteilergetriebe auf, das einen Antrieb zum Anschließen an eine Triebwelle der Zugmaschine sowie mindestens zwei Abtriebe aufweist. Über das Verteilergetriebe sind an die Abtriebe angeschlossene landwirtschaftliche Arbeitsmaschinen antreibbar.

Die Anbauvorrichtung weist außerdem mindestens eine erste und eine zweite Anhänganordnung zum Anhängen einer Standard- Kupplungsanordnung der landwirtschaftlichen Arbeitsmaschine im Feldbetrieb auf. Dafür weisen sie Anhängelemente wie beispielsweise Fanghaken und/oder Kugeln auf, an denen jeweils ein Kupplungselement der Standard- Kupplungsanordnung, wie beispielsweise ein Bolzen, befestigbar ist.

Die Anbauvorrichtung zeichnet sich dadurch aus, dass sie zum Anhängen gezogener landwirtschaftlicher Arbeitsmaschinen vorgesehen ist, wobei die Anhänganordnungen jeweils ein Paar Anhängelemente aufweisen, die als Fanghaken ausgebildet sind. Dadurch sind als Bolzen ausgebildete Kupplungselemente der Standard- Kupplungsanordnungen landwirtschaftlicher Arbeitsmaschinen an die Anhängelemente anhängbar.

Das Verteilergetriebe ist die einzige Antriebskomponente der Anbauvorrichtung zum Antreiben der zumindest zwei landwirtschaftlichen Arbeitsmaschinen. Da die Anbauvorrichtung keine weiteren Antriebskomponenten, wie beispielsweise Getriebebauteile, Getriebe, insbesondere Winkelgetriebe, oder Wellen, aufweist, ist sie kostengünstig herstellbar.

In einer bevorzugten Ausführungsform ist jeder der Anhänganordnungen jeweils ein Abtrieb des Verteilergetriebes zugeordnet, wobei der Abtrieb zum Antreiben einer Getriebewelle der Standard- Kupplungsanordnung vorgesehen ist, und wobei die Anhänganordnungen und der ihnen zugeordnete Abtrieb jeweils zum unmittelbaren Anschließen der Getriebewelle an den Abtrieb ausgebildet sind. Bei einem solchen unmittelbaren Anschließen der Getriebewelle an den Abtrieb werden auch bei der Montage der landwirtschaftlichen Arbeitsmaschine keine weiteren Antriebskomponenten wie beispielsweise Getriebe, Getriebebauteile oder Wellen zwischen dem Abtrieb und der Getriebewelle benötigt. Das Anhängen der landwirtschaftlichen Arbeitsmaschine an die Anbauvorrichtung ist daher sehr schnell und einfach möglich.

Die Anbauanordnung ist in eine Erstreckungsrichtung ausgerichtet, wobei die beiden Anhänganordnungen jeweils in einem Positionierungswinkel, insbesondere nicht parallel, mit 0°< α ≤ 90° zur Anbauanordnung ausgerichtet sind.

Im Rahmen der vorliegenden Erfindung ist eine Richtung, in die sich eine Verbindungslinie zwischen zwei Elementen einer Anordnung erstreckt, insbesondere zwischen zwei Anbauelementen einer Anbauanordnung oder zwischen zwei Anhängelementen einer Anhänganordnung oder zwischen zwei Kupplungselementen einer Kupplungsanordnung, als Ausrichtung bezeichnet. Eine Verbindungslinie zwischen zwei Anhängelementen der Anhänganordnung verläuft daher bevorzugt in dem Positionierungswinkel zu einer Verbindungslinie zwischen zwei Anbauelementen der Anbauanordnung. Dabei erstreckt sich die Verbindungslinie zwischen den Anbauelementen in die Erstreckungsrichtung der Anbauvorrichtung.

Dafür sind ein Paar Anbauelemente der Anbauanordnung in Erstreckungsrichtung fluchtend zueinander angeordnet. Zudem sind die Anhänganordnungen jeweils seitlich der Anbauanordnung angeordnet. Vorzugsweise sind sie jeweils zudem an gegenüberliegenden Seiten der Anbauvorrichtung, insbesondere an einander gegenüberliegenden Seiten, angeordnet. Eine ein Paar Anhängelemente der Anhänganordnung verbindende Verbindungslinie weist dabei einen Positionierungswinkel zur Erstreckungsrichtung auf, der größer als 0° ist.

Die zumindest zwei Anhänganordnungen sind daher nicht parallel, das heißt im Positionierungswinkel 0°, sondern in einem Positionierungswinkel größer als 0° und kleiner als oder gleich 90° zur Anbauanordnung ausgerichtet. Im Rahmen von Fertigungstoleranzen kann der Positionierungswinkel geringfügig, aber um nicht mehr als 2°, größer oder kleiner sein. Vorzugsweise beträgt der Positionierungswinkel etwa 23°< α ≤ 90°.

Eine solche nichtparallele Ausrichtung der Anhänganordnungen zur Anbauanordnung kann dabei das unmittelbare Anschließen von zwei oder sogar mehr Getriebewellen von Standard- Kupplungsanordnungen jeweils an einen Abtrieb des Verteilergetriebes ohne weitere Antriebskomponenten ermöglichen. Dabei können die Abtriebe des Verteilergetriebes nichtrechtwinklig zueinander angeordnet sein. Es ist aber bevorzugt, dass das Verteilergetriebe als T- Getriebe mit zwei rechtwinkelig zum Antrieb angeordneten Abtrieben ausgebildet ist. Dadurch können herkömmliche T- Getriebe verwendet werden.

Bei dieser Ausführungsform des Verteilergetriebes sind die zumindest zwei Anhänganordnungen bevorzugt jeweils in einem Positionierungswinkel mit 45°< α ≤ 90° zur Anbauanordnung ausgerichtet. Sofern der Positionierungswinkel ungleich 90° ist, verläuft der aus dem Verteilergetriebe, der Getriebewelle und einem Schwenkgetriebe der Standard- Kupplungsanordnung der landwirtschaftlichen Arbeitsmaschine gebildete Antriebsstrang dann in Form einer W-Beuge.

Es ist aber besonders bevorzugt, dass die zumindest zwei Anhänganordnungen an einander gegenüberliegenden Seiten der Anbauvorrichtung angeordnet und quer zur Anbauanordnung ausgerichtet sind. In dieser Ausführungsform beträgt der Positionierungswinkel im Wesentlichen 90°. Dadurch sind die zumindest zwei landwirtschaftlichen Arbeitsmaschinen so weit wie möglich voneinander beabstandet angeordnet. Dabei ist es bevorzugt, dass zwischen die Arbeitsmaschinen eine dritte Arbeitsmaschine an die Anbauanordnung anhängbar ist.

Dafür weist die Anbauanordnung bevorzugt eine dritte Anhänganordnung auf. Die dritte Anhänganordnung ist bevorzugt parallel der Anbauanordnung ausgerichtet. Vorzugsweise ist sie an der der Anbauanordnung gegenüberliegenden Seite der Anbauvorrichtung angeordnet, besonders bevorzugt gegenüber der Anbauanordnung. Die dritte Anhänganordnung ermöglicht nicht nur den Anbau einer dritten landwirtschaftlichen Arbeitsmaschine an die Anbauvorrichtung. Sondern die Anhänganordnungen können jede für sich jeweils zum Anhängen einer einzigen landwirtschaftlichen Arbeitsmaschine, oder in Kombination mit einer weiteren Arbeitsmaschine, oder in Kombination mit zwei weiteren Arbeitsmaschinen genutzt werden. Dadurch ist die Anbauvorrichtung sehr flexibel einsetzbar.

Neben den beiden, insbesondere im rechten Winkel zum Antrieb, angeordneten Abtrieben weist das Verteilergetriebe dafür bevorzugt einen dritten Abtrieb auf, der parallel zum Antrieb ausgerichtet ist. Der dritte Abtrieb weist bei Nutzung eines Standard- T- Getriebes daher jeweils einen rechten Winkel zu den anderen beiden Abtrieben auf.

Dabei ist es bevorzugt, dass der Positionierungswinkel der ersten und zweiten Anhänganordnung zur Anbauanordnung gleich groß ist. Besonders bevorzugt ist die Anbauvorrichtung spiegelsymmetrisch ausgebildet. Dies ermöglicht eine möglichst gleichmäßige Leistungsverteilung bei an die erste und zweite Anhänganordnung angehängten landwirtschaftlichen Arbeitsmaschinen.

In einer besonders bevorzugten Ausführungsform sind daher die erste und die zweite Anhänganordnung in einem rechten Positionierungswinkel zur Anbauanordnung ausgerichtet. Vorzugsweise ist das Verteilergetriebe als T- Getriebe ausgebildet, und die Abtriebe des T- Getriebes sind weiterhin bevorzugt auf einer die erste und zweite Anhänganordnung mittig durchsetzenden fiktiven Linie angeordnet. Dabei kann zudem ein dritter Abtrieb, der parallel zum Antrieb angeordnet ist, am T- Getriebe vorgesehen sein. Zudem kann eine dritte Anhänganordnung vorgesehen sein, die parallel zum Antrieb ausgerichtet ist. Eine solche Anbauvorrichtung ist spiegelsymmetrisch herstellbar und lässt insbesondere bei zwei oder drei angehängten landwirtschaftlichen Arbeitsmaschinen eine günstige Leistungsverteilung zu. Sie ist mit nur einer einzigen Antriebskomponente ausgestattet, nämlich dem als T- Getriebe ausgebildeten Verteilergetriebe. Es können herkömmliche T- Getriebe genutzt werden. Die Anbauvorrichtung kann daher kostengünstig hergestellt werden. Weiterhin ist die Anbauvorrichtung kompakt herstellbar.

Vorzugsweise weisen die Anhänganordnungen jeweils ein Paar Anhängelemente auf, wobei der Abstand der Anhängelemente eines Paares entweder einstellbar ist oder einem standardisierten Abstand entspricht. Sofern ein Abstand eines Paares Anhängelemente einstellbar ist, können Standard- Kupplungsanordnungen mit beliebigen Abständen ihrer Kupplungselemente zueinander an die Anhänganordnung angehängt werden. Es ist aber besonders bevorzugt, dass der Abstand der Paare von Anhängelementen der Anhänganordnungen jeweils einem standardisierten Abstand entspricht. Dadurch ist die Getriebewelle der Standard-Kupplungsanordnungen immer optimal mittig positioniert.

Um dennoch ein Anhängen landwirtschaftlicher Arbeitsmaschinen mit verschiedenem Abstand der Kupplungselemente zueinander zu ermöglichen, ist es bevorzugt, dass die Anhängelemente der dritten Anhänganordnung einen anderen Abstand zueinander aufweisen, als die Anhängelemente der ersten und zweiten Anhänganordnung.

Dabei sind die Anhängelemente bevorzugt als Fanghaken und/oder Kugeln ausgebildet. Die Anbauelemente sind bevorzugt als Bolzen ausgebildet.

Weiterhin ist es bevorzugt, dass die Anbauvorrichtung höhenverstellbare, vorzugsweise verschiebliche, Stützfüße umfasst. Die Stützfüße ermöglichen bei angehängter landwirtschaftlicher Arbeitsmaschine ein Absetzen der Anbauvorrichtung, insbesondere auf dem Feld.

Durch eine fachwerkartige Ausbildung der Anbauanordnung, insbesondere aus stangen- oder rohrförmigen Trägern, kann die Anbauanordnung verhältnismäßig leicht ausgebildet sein. Dadurch ist sie trotz ihrer großen Ausmaße leicht handhabbar. Dabei ist es bevorzugt, dass das Verteilergetriebe an einer Unterseite der Anbauvorrichtung angeordnet ist. Dies ist in Bezug auf die Anordnung und den Verlauf des gesamten Antriebsstrangs vorteilhaft. Prinzipiell kann die Anbauvorrichtung auch kastenartig ausgebildet sein.

Die Aufgabe wird ebenfalls gelöst mit einem Arbeitszug mit einer Zugmaschine, die im heckseitigen Anbauraum ein Standard- Heckhubwerk aufweist, mit einer landwirtschaftlichen Arbeitsmaschine, und mit einer solchen Anbauvorrichtung, die an das Standard- Heckhubwerk der Zugmaschine angebaut ist, wobei die landwirtschaftliche Arbeitsmaschine an die Anbauvorrichtung angehängt ist. Dabei ist die Anbauvorrichtung mit ihrer Anbauanordnung an das Standard- Heckhubwerk angebaut und stützt sich an diesem ab.

Die landwirtschaftliche Arbeitsmaschine weist bevorzugt eine Standard-Kupplungsanordnung auf, wobei die Standard- Kupplungsanordnung eine Getriebewelle sowie ein Paar Kupplungselemente umfasst, und wobei die Getriebewelle unmittelbar an ein Verteilergetriebe, insbesondere einen Abtrieb des Verteilergetriebes, der Anbauvorrichtung angeschlossen ist, und wobei die Kupplungselemente an eine erste oder eine zweite Anhänganordnung angekuppelt sind. Dabei werden keine weiteren Antriebskomponenten außer dem Verteilergetriebe benötigt.

An die Anbauanordnung kann nur eine landwirtschaftliche Arbeitsmaschine oder zwei landwirtschaftliche Arbeitsmaschinen angehängt werden. Sofern drei Anhänganordnungen vorgesehen sind, ist auch der Anbau von drei landwirtschaftlichen Arbeitsmaschinen möglich. Die Arbeitsmaschinen können vom selben Typ oder verschiedenen Typs sein. Zudem können sie dieselbe Arbeitsbreite oder verschiedene Arbeitsbreiten aufweisen.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: schematisch einen Arbeitszug mit einer Zugmaschine, an die eine erfindungsgemäße Anbauvorrichtung angebaut ist, wobei zwei landwirtschaftliche Arbeitsmaschinen an die Anbauvorrichtung angehängt sind;

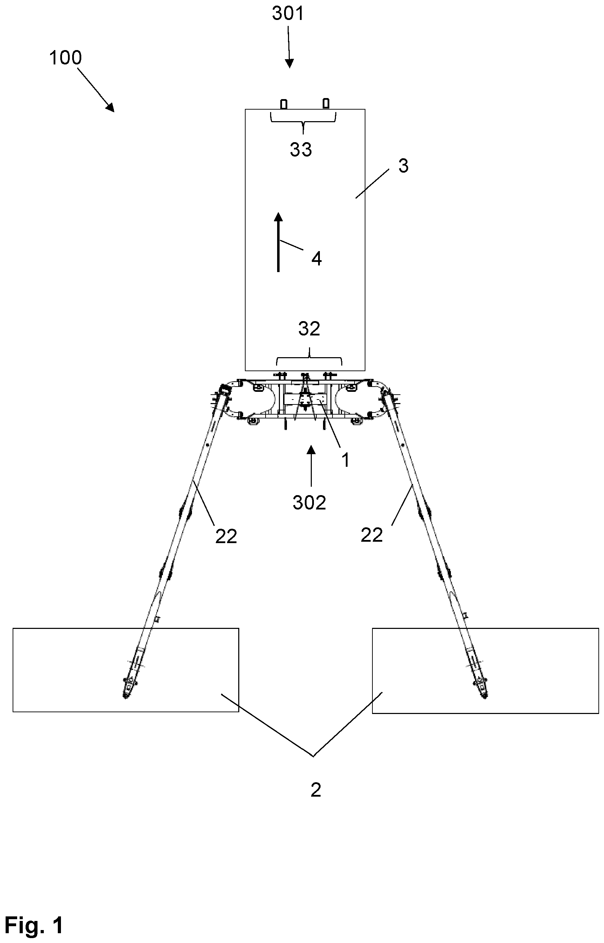

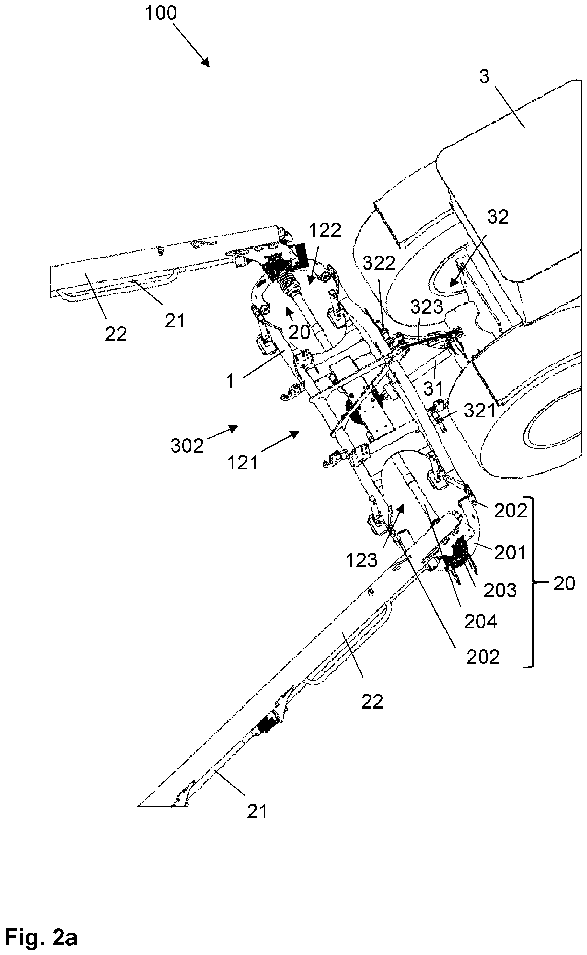

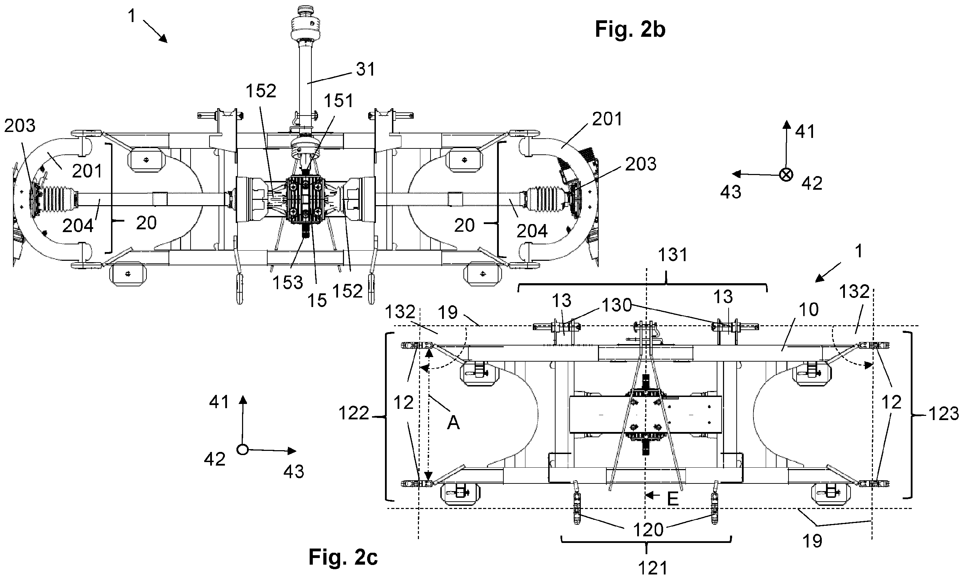

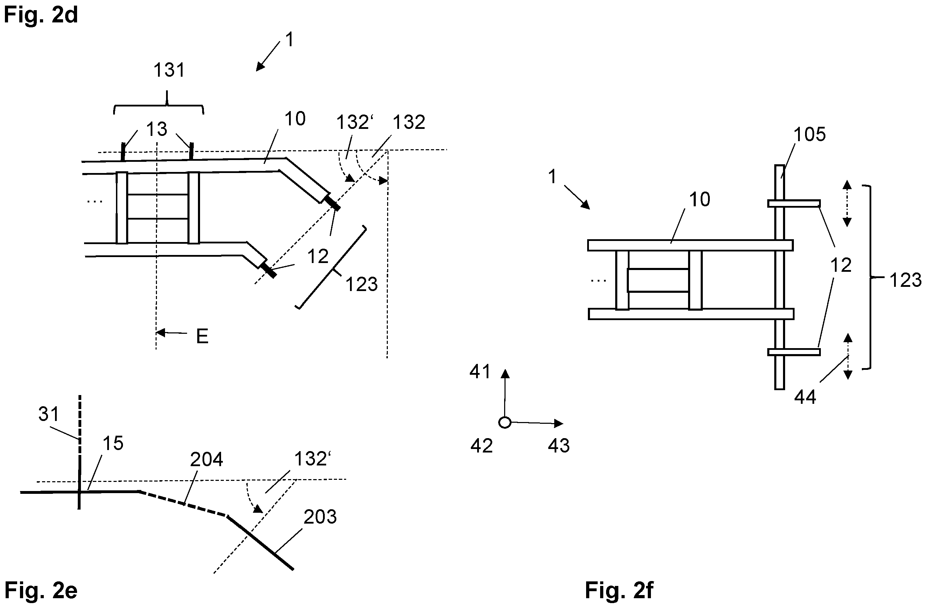

- Fig. 2: in (a) einen Ausschnitt aus dem Arbeitszug der Fig. 1 in einer perspektivischen Ansicht, in (b) eine Unterseite der Anbauvorrichtung aus (a) mit angehängten Standard- Kupplungsanordnungen landwirtschaftlicher Arbeitsmaschinen, in (c) eine Draufsicht auf die Anbauvorrichtung aus (a), in (d) schematisch einen Ausschnitt aus einer weiteren Ausführungsform einer erfindungsgemäßen Anbauvorrichtung, in (e) schematisch einen Ausschnitt aus einem Antriebsstrang der Anbauvorrichtung aus (d), und in (f) schematisch einen Ausschnitt aus einer weiteren Ausführungsform einer erfindungsgemäßen Anbauvorrichtung; und
- Fig. 3: in (a) - (c) jeweils verschiedene perspektivische Ansichten der Anbauvorrichtung aus den Fig. 1 und 2(a) - (c).

Fig. 1 zeigt schematisch einen Arbeitszug 100 mit einer Zugmaschine 3, an die eine erfindungsgemäße Anbauvorrichtung 1 angebaut ist, wobei zwei landwirtschaftliche Arbeitsmaschinen 2 an die Anbauvorrichtung 1 angehängt sind. Als Zugmaschine eignet sich beispielsweise ein Traktor. Daher werden die Begriffe Traktor und Zugmaschine 3 im Folgenden synonym verwendet.

Ein solcher Traktor 3 weist oftmals einen frontseitigen Anbauraum 301 zum Anbauen von landwirtschaftlichen Arbeitsmaschinen 2 sowie eine heckseitigen Anbauraum 302 zum Anbauen von landwirtschaftlichen Arbeitsmaschinen 2 auf. Die erfindungsgemäße Anbauvorrichtung 1 ist zum Anbauen an den heckseitigen Anbauraum 302 ausgebildet. Sie eignet sich zum Anhängen gezogener landwirtschaftlicher Arbeitsmaschinen 2. Zudem ist sie für den Feldbetrieb ausgebildet. Eine Transportstellung der gezogenen landwirtschaftlichen Arbeitsmaschinen 2 ist nicht vorgesehen.

Die landwirtschaftlichen Arbeitsmaschinen 2 weisen jeweils eine Zugstange 22 auf, mit der sie an die Anbauvorrichtung 1 angehängt sind. Dabei kann es sich prinzipiell um beliebige gezogene Arbeitsmaschinen 2 handeln. Dabei kommen beispielsweise Mähmaschinen, Heuwerbungsmaschinen, Ballen- oder Pelletierpressen, Bodenbearbeitungsmaschinen wie beispielsweise Eggen oder Pflüge oder andere Arbeitsmaschinen 2 in Betracht.

Fig. 2 zeigt in (a) einen Ausschnitt aus dem Arbeitszug 100 der Fig. 1 in einer perspektivischen Ansicht. Sichtbar sind die Anbindung der Anbauvorrichtung 1 an den Traktor 3 sowie jeweils die Anbindung der Zugstangen 22 der landwirtschaftlichen Arbeitsmaschinen 2 an die Anbauvorrichtung 1.

Der Traktor 3 weist im heckseitigen Anbauraum 302 ein Standard- Heckhubwerk 32 auf. Das Standard- Heckhubwerk 32 ist als Dreipunkt- Hubvorrichtung ausgebildet. Es weist zwei Unterlenker 321, 322 auf, an denen jeweils ein Fanghaken und/oder eine Kugel (nicht bezeichnet) angeordnet sind. An die Fanghaken und/oder Kugeln sind die Kupplungselemente 202 einer Standard- Kupplungsanordnung 20 einer landwirtschaftlichen Arbeitsmaschine 2 ankuppelbar. Im Rahmen dieser Beschreibung sind die Fanghaken und/oder Kugeln des Standard- Heckhubwerks 32 auch als Gegenanbauelemente bezeichnet. Das Standard- Heckhubwerk 32 weist daher ein Paar Gegenanbauelemente auf.

Weiterhin weist das Standard- Heckhubwerk 32 einen Oberlenker 323 auf, der ebenfalls einen Fanghaken und/oder eine Kugel aufweisen kann. Der Oberlenker 323 ist oberhalb der beiden Unterlenker 321, 322 etwa mittig angeordnet.

Im heckseitigen Anbauraum 302 erstreckt sich zudem eine Triebwelle 31 des Traktors 3, die zum Antreiben landwirtschaftlicher Arbeitsmaschinen 2 vorgesehen ist. Die Triebwelle 31 wird im Feldbetrieb vom Traktor 3 aus angetrieben.

Die landwirtschaftlichen Arbeitsmaschinen 2 weisen jeweils eine Standard-Kupplungsanordnung 20 auf. Die Standard- Kupplungsanordnung 20 ist an einem Ende (nicht bezeichnet) der Zugstange 22 angeordnet. Sie ist im Folgenden anhand einer der Standard- Kupplungsanordnungen 20 einer der landwirtschaftlichen Arbeitsmaschinen 2 beschrieben.

Die Standard- Kupplungsanordnung 20 weist einen Kupplungsarm 201 auf, der spiegelsymmetrisch ausgebildet ist. Im vorliegenden Ausführungsbeispiel ist der Kupplungsarm 201 bogenförmig, hier etwa u- förmig ausgebildet. Er weist zwei offene Enden (nicht bezeichnet) auf. Zudem erstreckt sich der Kupplungsarm 201 in einer Kupplungsarmebene (nicht gezeigt). Die Enden des Kupplungsarms 201 sind daher in der Kupplungsarmebene einander gegenüberliegend angeordnet.

An den Enden ist jeweils ein Kupplungselemente 202 angeordnet. Eine solche Standard- Kupplungsanordnung 20 weist daher ein Paar Kupplungselemente 202 auf. Die Kupplungselemente 202 sind hier als Bolzen ausgebildet. Sie sind zum Anhängen an Gegenanbauelemente des Standard- Heckhubwerks 32 des Traktors 3 vorgesehen.

Weiterhin weist die Standard- Kupplungsanordnung 20 ein Schwenkgetriebe 203 auf. Das Schwenkgetriebe 203 ist um eine Schwenkachse (nicht gezeigt), die sich quer zur Kupplungsarmebene erstreckt, in und gegen eine Schwenkrichtung (nicht gezeigt) drehbar. Es ist etwa mittig des Kupplungsarms 201 angeordnet. Zudem ist es zwischen der Zugstange 22 und dem Kupplungsarm 201 angeordnet. Dadurch ist der Kupplungsarm 201 relativ zur Zugstange 22 in und gegen die Schwenkrichtung drehbar.

Weiterhin weist die Standard- Kupplungsanordnung 20 eine Getriebewelle 204 auf, die mit dem Schwenkgetriebe 203 antriebsverbunden ist. Durch die mittig des Kupplungsarms 201 vorgesehene Anordnung des Schwenkgetriebes 203 erstreckt sich die Getriebewelle 204 vom Schwenkgetriebe 203 ausgehend ebenfalls etwa mittig des Kupplungsarms 201 zu einem Anschlussende (nicht gezeigt) hin.

Sichtbar ist zudem, dass sich unterhalb der Zugstange 22 eine Antriebswelle 21 erstreckt. Die Antriebswelle 21 ist zum Antrieb der landwirtschaftlichen Arbeitsmaschine 2 vorgesehen. Sie ist mit dem Schwenkgetriebe 203 antriebsverbunden.

Um im Feldeinsatz nicht nur eine landwirtschaftliche Arbeitsmaschine 2 mit ihrer Standard- Kupplungsanordnung 20 an das Standard- Heckhubwerk 32 des Traktors 3, sondern mehrere landwirtschaftliche Arbeitsmaschinen 2 gleichzeitig an den Traktor 3 anhängen zu können, ist die Anbauvorrichtung 1 vorgesehen. Die Anbauvorrichtung 1 ist im heckseitigen Anbauraum 302 des Traktors 3 an das Standard- Heckhubwerk 32 des Traktors 3 anbaubar.

Die Anbauvorrichtung 1 weist dafür eine Anbauanordnung 131 auf, die dazu vorgesehen ist, sie an das Standard- Heckhubwerk 32 des Traktors 3 anzubauen. Zudem weist sie drei Anhänganordnungen 121 - 123 auf, die jeweils zum Anhängen einer Standard- Kupplungsvorrichtung 20 einer landwirtschaftlichen Arbeitsmaschine 2 vorgesehen sind. Die dargestellte Anbauvorrichtung 1 ermöglicht daher das Anhängen von bis zu drei landwirtschaftlichen Arbeitsmaschinen 2.

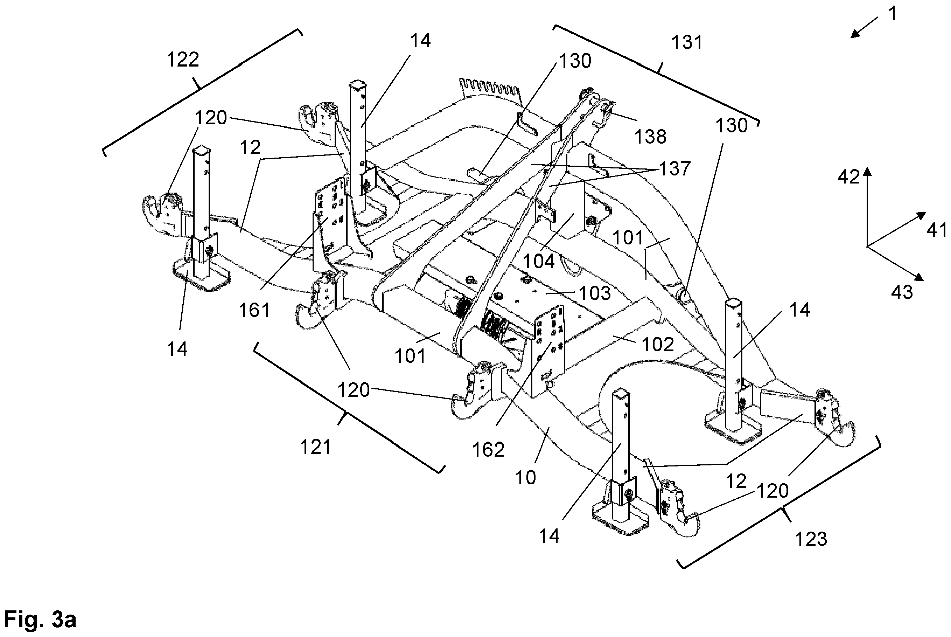

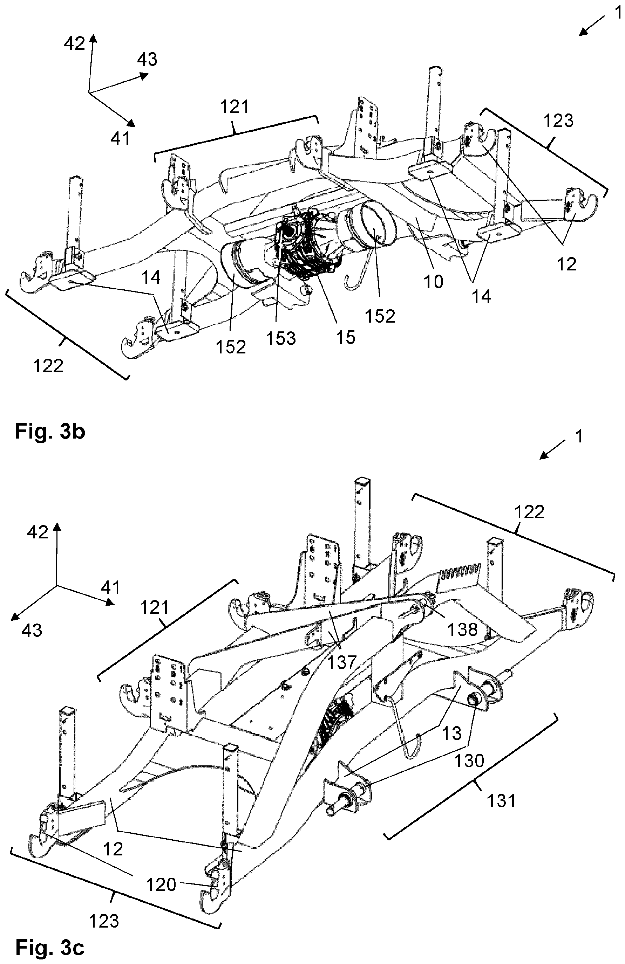

Die Anbauvorrichtung 1 wird anhand der folgenden Figuren beschrieben. Dabei beziehen sich die Figuren 2(b) - (c) sowie 3(a) - (c) auf die in den Figuren 1 und 2(a) dargestellte Ausführungsform. Die Figuren 2(d) - (f) zeigen alternative Ausführungsformen.

Fig. 2(b) zeigt eine Unterseite der Anbauvorrichtung 1, wobei an einer ersten und einer zweiten Anhänganordnung 122 - 123 jeweils eine Standard-Kupplungsanordnung 20 angehängt ist, Fig. 2(c) zeigt eine Draufsicht auf die Anbauvorrichtung 1 ohne die angehängten Standard- Kupplungsanordnungen 20, und die Fig. 3 (a) - (c) zeigen jeweils verschiedene perspektivische Ansichten der Anbauvorrichtung 1, ebenfalls ohne die angehängten Standard-Kupplungsanordnungen 20.

Um die Triebwelle 31 des Traktors 3 mit einer landwirtschaftlichen Arbeitsmaschine 2 zu verbinden, weist die Anbauvorrichtung 1 ein zentrales Verteilergetriebe 15 auf. Das zentrale Verteilergetriebe 15 weist einen Antrieb 151 auf, an den die Triebwelle 31 der Zugmaschine 3 anschließbar ist. Weiterhin weist es drei Abtriebe 152, 153 auf, die jeweils zum Anschließen einer Getriebewelle 204 der Standard-Kupplungsanordnung 20 einer landwirtschaftlichen Arbeitsmaschine 2 vorgesehen sind. Beim Antreiben der am Antrieb angeschlossenen Triebwelle 31 des Traktors 3 werden die Abtriebe 152 - 153 angetrieben, so dass die an den Abtrieben 152 - 153 angeschlossenen Getriebewellen 204 und die über die Schwenkgetriebe 203 angeschlossenen Antriebswellen 21 der landwirtschaftlichen Arbeitsmaschinen 2 angetrieben werden.

Den Anhänganordnungen 121 - 123 ist jeweils einer der Abtriebe 152 - 153 zugeordnet. Das heißt, dass jeder der Abtriebe 152 - 153 so positioniert ist, dass bei Anhängen einer Standard- Kupplungsanordnung 20 ihre Getriebewelle 204 an den der Anhänganordnung 121 - 123 zugeordneten Abtrieb 152 - 153 anschließbar ist.

Dabei sind die Anhänganordnungen 121 - 123 und die Abtriebe 152 - 153 des zentralen Verteilergetriebes 15 so zueinander positioniert, dass das Anschließen der Getriebewelle 204 ohne weitere Antriebskomponenten, wie beispielsweise Getriebeteile, Getriebe, insbesondere Winkelgetriebe, oder Wellen, an die Abtriebe 152 - 153 des Verteilergetriebes 15 möglich ist. Die Getriebewellen 204 der Standard- Kupplungsanordnungen 20 sind daher jeweils unmittelbar an die den Anhänganordnungen 121 - 123 zugeordneten Abtriebe 152, 153 anschließbar.

Dadurch ist das Verteilergetriebe 15 die einzige Antriebskomponente der Anbauvorrichtung 1 zum Antreiben der landwirtschaftlichen Arbeitsmaschinen 2. Bei dieser Bauweise ist die Anbauvorrichtung 1 nicht nur kostengünstig herstellbar, sondern das Anhängen von landwirtschaftlichen Arbeitsmaschinen 2 ist dadurch für den Bediener einfach und schnell möglich.

Die Anbauvorrichtung 1 weist dafür eine erste und eine zweite Anhänganordnung 122 - 123 auf, die quer zur Anbauanordnung 131 ausgerichtet sind. Diese beiden Anhänganordnungen 122 - 123 weisen daher jeweils einen Positionierungswinkel α, der in den Figuren mit dem Bezugszeichen 132 gekennzeichnet ist, von etwa 90° zur Anbauanordnung 131 auf. Sie sind jeweils seitlich der Anbauanordnung 131 angeordnet. Zudem liegen sie einander gegenüber. Die diesen Anhänganordnungen 122 - 123 zugeordneten Abtriebe 152 des Verteilergetriebes 15 sind hier dafür in einem rechten Winkel zum Antrieb 151 angeordnet.

Die dritte Anhänganordnung 121 ist parallel zur Anbauanordnung 131 ausgerichtet. Sie weist daher einen Positionierungswinkel α von etwa 0° zur Anbauanordnung 131 auf. Weiterhin ist sie der Anbauanordnung 131 gegenüberliegend angeordnet. Der dieser Anhänganordnung 123 zugeordnete Abtrieb 153 ist fluchtend zum Antrieb 151, das heißt hier insbesondere jeweils in einem rechten Winkel zu den beiden weiteren Abtrieben 152, positioniert.

Das hier genutzte Verteilergetriebe 15 ist daher als ein Standard- T- Getriebe mit einem Antrieb und drei Abtrieben ausgebildet.

Das Verteilergetriebe 15 ist dabei mittig der Anbauvorrichtung 131 positioniert. Die Abtriebe 152 - 153 erstrecken sich somit mittig der ihnen zugeordneten Anhänganordnungen 121 - 123. Weiterhin ist das Verteilergetriebe 15 an einer Unterseite (nicht bezeichnet) der Anbauvorrichtung 1 positioniert. Die Anbauvorrichtung 1 ist außerdem zu einer Symmetrieebene E, die die Anbauanordnung 1 halbiert, und die sich insbesondere entlang des Antriebs 151 erstreckt, spiegelsymmetrisch ausgebildet.

Die Anbauvorrichtung 1 ist hier fachwerkartig ausgebildet und weist mehrere aus Rohren oder Stangen gebildete Träger 101 - 104 auf. Sie umfasst drei Längsträger 101, die sich in eine Erstreckungsrichtung 43 erstrecken. Ein erster und ein zweiter unterer Längsträger 101 sind durch zwei voneinander beabstandete Querträger 102 miteinander verbunden. Zwischen den Querträgern 102 ist ein plattenförmiger Verbindungsträger 103 vorgesehen, an dem das Verteilergetriebe 15 befestigt ist. Der dritte Längsträger 101 erstreckt sich oberhalb des ersten der beiden unteren Längsträger 101 und ist von diesem beabstandet. Mittig zwischen dem ersten und dritten Längsträger 101 erstreckt sich ein Zwischenträger 104. Ein Oberträger 137, der hier aus zwei Streben (nicht separat bezeichnet) besteht, erstreckt sich mittig der Anbauvorrichtung 1 vom zweiten Längsträger 101 ausgehend zum dritten Längsträger 101 hin.

Zum Anbauen an den Traktor 3 weist die Anbauanordnung 131 ein Paar Anbaulenker 13 auf, an deren offenem Ende jeweils Anbauelemente 130 vorgesehen sind. Die Anbaulenker 13 sind am ersten Längsträger 101 befestigt. Weiterhin sind die Anbauelemente 130 hier als Bolzen ausgebildet. Dadurch können sie an als Fanghaken ausgebildete, an den Unterlenkern 321, 322 angeordnete Gegenanbauelemente des Standard- Heckhubwerks 32 des Traktors 3 befestigt werden.

Der Oberträger 137 ist zum Befestigen der Anbauanordnung 131 am Oberlenker 323 des Standard- Heckhubwerks 32 vorgesehen. Er weist dafür als Befestigungselement 138 einen Bolzen auf, der an einem Fanghaken des Oberlenkers 323 befestigt wird. Durch Befestigen des Oberträgers 137 am Oberlenker 323 wird ein Verkippen der Anbauvorrichtung 1 verhindert.

Eine Verbindungslinie 19 der Anbauelemente 130 der Anbauanordnung 131 erstreckt sich in die Erstreckungsrichtung 43 der Anbauvorrichtung 1. In einem Anbauzustand (nicht bezeichnet) der Anbauvorrichtung 1 am Traktor 3 erstreckt sich die Verbindungslinie 19 quer zu einer Erstreckungsrichtung 4 des Traktors 3.

Die beiden unteren Längsträger 101 bilden an ihren gegenüberliegenden Enden jeweils Anhänglenker 12 der ersten und zweiten Anhänganordnung 121, 122. An den Enden der Anhänglenker 12 sind jeweils Anhängelemente 120 befestigt. Die Anhänganordnungen 121, 122 weisen daher jeweils ein Paar Anhängelemente 120 auf. Die Anhängelemente 120 sind hier als Fanghaken ausgebildet, so dass als Bolzen ausgebildete Kupplungselemente 202 der Standard- Kupplungsanordnungen 20 der landwirtschaftlichen Arbeitsmaschinen 2 an die Anhängelemente 120 anhängbar sind.

Eine Verbindungslinie 19 zwischen den Anhängelementen 120 erstreckt sich hier im rechten Winkel zur Erstreckungsrichtung 43 der Anbauvorrichtung 1.

Der Winkel zwischen den Verbindungslinien 19 der Anbauelemente 130 und jeweils der Verbindungslinie 19 zwischen einem Paar Anhängelemente 120 ist im Rahmen dieser Erfindung als Positionierungswinkel 132 bezeichnet. Er beträgt in diesem Ausführungsbeispiel gerade 90°.

Die dritte Anhänganordnung 123 ist der Anbauanordnung 131 gegenüberliegend positioniert und an dem zweiten Längsträger 101 angeordnet. Dabei ist das Paar Anhängelemente 120 hier unmittelbar am Längsträger 101 befestigt. Prinzipiell könnten aber auch für diese Anhänganordnung 123 Anhänglenker (hier nicht gezeigt) vorgesehen sein. Eine Verbindungslinie 19 zwischen den Anhängelementen 120 der dritten Anhänganordnung 123 verläuft daher parallel der Verbindungslinie 19 zwischen den Anbauelementen 130.

Bei dieser Ausführungsform weisen die Anhängelemente 120 jedes Paares der Anhänganordnungen 121 - 123 jeweils einen definierten Abstand A zueinander auf. Um ein Anhängen einer Standard- Kupplungsanordnung 20 einer landwirtschaftlichen Erntemaschine 2 zu ermöglichen, ist dieser Abstand A hier entsprechend dem Standard gewählt. Fig. 2(f) zeigt einen schematischen Ausschnitt aus einer weiteren Ausführungsform einer erfindungsgemäßen Anbauvorrichtung 1, die endseitig der unteren Längsträger 101 jeweils eine Schiebestange 105 umfasst, entlang der die Anhängelemente 120 einer Anhänganordnung 122 - 123 jeweils verschieblich sind, um ihren Abstand A zueinander einzustellen.

Um die landwirtschaftlichen Arbeitsmaschinen 2 auf dem Feld vom Traktor 3 abkoppeln zu können, weist die Anbauvorrichtung 1 weiterhin höhenverstellbare, hier verschiebliche, Stützfüße 14 auf, mit denen sie bei angehängten landwirtschaftlichen Arbeitsmaschinen 2 am Boden absetzbar ist.

Zudem sind an der Anbauvorrichtung 1 Befestigungsmittel 161, 162 für hydraulische und elektrische Komponenten (nicht gezeigt) vorgesehen.

Die Fig. 2 (d) und 2 (e) beschreiben eine Ausführungsform einer erfindungsgemäßen Anbauvorrichtung 1, bei der das Verteilergetriebe 15 zwar als Standard- T- Getriebe mit zwei rechtwinklig zum Antrieb 151 angeordneten Abtrieben 152 vorgesehen ist. Jedoch sind die erste und zweite Anhänganordnung 122 - 123 in einem Positionierungswinkel α größer als 45° zur Anbauanordnung 131 angeordnet. Ein solcher Positionierungswinkel α ist in den Figuren mit dem Bezugszeichen 132` bezeichnet. Bei dieser Wahl des Positionierungswinkels 132' ist ein Anschließen einer Gelenkwelle 204 an das Verteilergetriebe 15 in einer W- Beuge möglich.

Bei einem kleineren Positionierungswinkel (nicht gezeigt) müssten die der ersten und zweiten Anhänganordnung 122 - 123 zugeordneten Abtriebe 152 einen größeren Winkel zum Antrieb 151 aufweisen. Das Verteilergetriebe 15 einer solchen Ausführungsform der Anbauvorrichtung 1 wäre daher kein Standard- T- Getriebe.

## Patentansprüche

1. Anbauvorrichtung (1) zum Anbauen an einen heckseitigen Anbauraum (302) einer Zugmaschine (3), die eine Anbauanordnung (131) zum Anbauen an ein Standard- Heckhubwerk (32) einer Zugmaschine (3) sowie ein zentrales Verteilergetriebe (15) aufweist, das einen Antrieb (151) zum Anschließen an eine Triebwelle (31) der Zugmaschine (3) und mindestens zwei Abtriebe (152) aufweist, wobei die Anbauvorrichtung (1) zudem mindestens eine erste und eine zweite Anhänganordnung (122 - 123) zum Anhängen einer Standard-Kupplungsanordnung (20) jeweils einer landwirtschaftlichen Arbeitsmaschine (2) im Feldbetrieb aufweist, wobei die Anbauanordnung (131) in eine Erstreckungsrichtung (43) ausgerichtet ist, und wobei die Anhänganordnungen (122 - 123) jeweils seitlich der Anbauanordnung (131) angeordnet sind, wobei die beiden Anhänganordnungen (122 - 123) jeweils in einem Positionierungswinkel (α, 132, 132') mit 0°< α ≤ 90° zur Anbauanordnung (131) ausgerichtet sind, **dadurch gekennzeichnet, dass**
die Anbauvorrichtung (1) zum Anhängen gezogener landwirtschaftlicher Arbeitsmaschinen (2) vorgesehen ist, wobei die Anhänganordnungen (122 - 123) jeweils ein Paar Anhängelemente (120) aufweisen, die als Fanghaken ausgebildet sind.

2. Anbauvorrichtung (1) nach einem der vorherigen Ansprüche, **dadurch gekennzeichnet, dass** der Positionierungswinkel (α, 132, 132') der beiden Anhänganordnungen (122 - 123) zur Anbauanordnung (131) gleich ist.

3. Anbauvorrichtung (1) nach einem der vorherigen Ansprüche, **dadurch gekennzeichnet, dass** sie spiegelsymmetrisch ausgebildet ist.

4. Anbauvorrichtung (1) nach einem der vorherigen Ansprüche, **dadurch gekennzeichnet, dass** das Verteilergetriebe (15) als T- Getriebe mit zwei rechtwinkelig zum Antrieb (151) angeordneten Abtrieben (152) ausgebildet ist, wobei die zumindest zwei Anhänganordnungen (122 -123) jeweils in einem Positionierungswinkel (α, 132, 132') mit 45°< α ≤ 90° zur Anbauanordnung (131) ausgerichtet sind.

5. Anbauvorrichtung (1) nach Anspruch 4, **dadurch gekennzeichnet, dass** die erste und die zweite Anhänganordnung (122 - 123) in einem rechten Positionierungswinkel (α, 132) zur Anbauanordnung (131) ausgerichtet sind und die Abtriebe (152) des T- Getriebes (15) auf einer die Anhänganordnungen (122 - 123) mittig durchsetzenden fiktiven Linie angeordnet sind.

6. Anbauvorrichtung (1) nach einem der vorherigen Ansprüche, **dadurch gekennzeichnet, dass**
jeder der Anhänganordnungen (122 - 123) jeweils ein Abtrieb (152, 153) des Verteilergetriebes (15) zugeordnet ist, der zum Antreiben einer Getriebewelle (204) der Standard- Kupplungsanordnung (20) vorgesehen ist, und dass die Anhänganordnungen (122 - 123) sowie der ihnen zugeordnete Abtrieb (152) jeweils zum unmittelbaren Anschließen der Getriebewelle (204) ausgebildet sind.

7. Anbauvorrichtung (1) nach einem der vorherigen Ansprüche, **dadurch gekennzeichnet, dass** die Anbauvorrichtung (1) wenigstens eine dritte Anhänganordnung (121) umfasst, die parallel zur Anbauanordnung (131) ausgerichtet ist.

8. Anbauvorrichtung (1) nach Anspruch 7, **dadurch gekennzeichnet, dass** die dritte Anhänganordnung (121) der Anbauanordnung (131) gegenüberliegend angeordnet ist.

9. Anbauvorrichtung (1) nach einem der Ansprüche 7 - 8, **dadurch gekennzeichnet, dass** alle Anhänganordnungen (121 - 123) jeweils ein Paar Anhängelemente (120) aufweisen, wobei ein Abstand (A) der Anhängelemente (120) eines Paares einstellbar ist.

10. Anbauvorrichtung (1) nach einem der Ansprüche 7 - 9, **dadurch gekennzeichnet, dass** die Anhängelemente (120) der dritten Anhänganordnung (121) einen anderen Abstand (A) zueinander aufweisen, als die Anhängelemente (12) der ersten und zweiten Anhänganordnung (122 - 123).

11. Anbauvorrichtung (1) nach einem der vorherigen Ansprüche, **dadurch gekennzeichnet, dass** sie höhenverstellbare, insbesondere verschiebliche, Stützfüße (14) umfasst, die bei angehängter landwirtschaftlicher Arbeitsmaschine (2) zum Absetzen der Anbauvorrichtung (1) vorgesehen sind.

12. Anbauvorrichtung (1) nach einem der vorherigen Ansprüche, **dadurch gekennzeichnet, dass** sie fachwerkartig aus insbesondere stangen- oder rohrförmigen Trägern (101 - 105) gebildet ist.

13. Anbauvorrichtung (1) nach einem der Ansprüche 6 - 12 **dadurch gekennzeichnet, dass** die Anhänganordnungen (121 - 123) und die Abtriebe (152 - 153) des zentralen Verteilergetriebes (15) so zueinander positioniert sind, dass das Anschließen der Getriebewelle (204) ohne weitere Antriebskomponenten, wie Getriebeteile, Getriebe, insbesondere Winkelgetriebe, oder Wellen, an die Abtriebe (152 - 153) des Verteilergetriebes (15) möglich ist.

14. Arbeitszug (100) mit einer Zugmaschine (3), die im heckseitigen Anbauraum (302) ein Standard- Heckhubwerk (32) aufweist, mit einer landwirtschaftlichen Arbeitsmaschine (2), und mit einer Anbauvorrichtung (1) nach einem der vorherigen Ansprüche, die an das Standard- Heckhubwerk (32) der Zugmaschine (3) angebaut ist, wobei die landwirtschaftliche Arbeitsmaschine (2) an die Anbauvorrichtung (1) angehängt ist.

## Claims

1. Attachment device (1) for attachment to a rear attachment space (302) of a towing machine (3), which comprises an attachment arrangement (131) for attachment to a standard rear linkage (32) of a towing machine (3) and a central transfer gear mechanism (15) which comprises a drive (151) for connection to a drive shaft (31) of the towing machine (3) and at least two outputs (152), the attachment device (1) also having at least a first and a second hitching arrangement (122-123) for hitching a standard clutch arrangement (20) in each case to an agricultural working machine (2) in field operation, the attachment arrangement (131) being aligned in an extension direction (43), and the hitching arrangements (122-123) each being arranged laterally to the attachment arrangement (131), the two hitching arrangements (122-123) each being arranged at a positioning angle (α, 132, 132') with 0°< α < 90° to the attachment arrangement (131), **characterised in that**
the attachment device (1) is provided for hitching towed agricultural working machines (2), the hitching arrangements (122-123) each comprising a pair of hitching elements (120) which are designed as catch hooks.

2. Attachment device (1) according to any of the previous claims, **characterised in that** the positioning angle (α, 132, 132`) of the two hitching arrangements (122-123) to the attachment arrangement (131) is the same.

3. Attachment device (1) according to either of the preceding claims, **characteriseded in that** it is mirror-symmetrical.

4. Attachment device (1) according to any of the previous claims, **characterised in that** the transfer gear mechanism (15) is designed as a T-gear mechanism having two outputs (152) arranged at right angles to the drive (151), the at least two hitching arrangements (122-123) each being aligned at a positioning angle (α, 132, 132') with 45°< α < 90° to the attachment arrangement (131).

5. Attachment device (1) according to claim 4, **characterised in that** the first and the second hitching arrangement (122-123) are aligned at a right positioning angle (α, 132) to the attachment arrangement (131) and the outputs (152) of the T-gear mechanism (15) are arranged on an imaginary line passing centrally through the hitching arrangements (122-123).

6. Attachment device (1) according to any of the preceding claims, **characterised in that**
in each case one output (152, 153) of the transfer gear mechanism (15) is assigned to each of the hitching arrangements (122-123), which output is provided for driving a transmission shaft (204) of the standard clutch arrangement (20), and **in that** the hitching arrangements (122-123) and the output (152) assigned thereto are each designed for direct connection to the transmission shaft (204).

7. Attachment device (1) according to any of the preceding claims, **characterised in that** the attachment device (1) comprises at least a third hitching arrangement (121), which is aligned in parallel with the attachment arrangement (131).

8. Attachment device (1) according to claim 7, **characterised in that** the third hitching arrangement (121) is arranged opposite the attachment arrangement (131).

9. Attachment device (1) according to any of claims 7-8,
**characterised in that** all hitching arrangements (121-123) comprise in each case one pair of hitching elements (120), a distance (A) between the hitching elements (120) of a pair being adjustable.

10. Attachment device (1) according to any of claims 7-9,
**characterised in that** the hitching elements (120) of the third hitching arrangement (121) have a different distance (A) from one another than the hitching elements (12) of the first and the second hitching arrangement (122-123).

11. Attachment device (1) according to any of the preceding claims, **characterised in that** it has height-adjustable, in particular movable, support feet (14) which are provided for the setting down of the attachment device (1) when the agricultural working machine (2) is hitched.

12. Attachment device (1) according to any of the preceding claims, **characterised in that** it is formed in a truss-like manner from, in particular, rodshaped or tubular supports (101-105).

13. Attachment device (1) according to any of claims 6-12,
**characterised in that** the hitching arrangements (121-123) and the outputs (152-153) of the central transfer gear mechanism (15) are positioned relative to one another in such a way that it is possible to connect the transmission shaft (204) to the outputs (152-153) of the transfer gear mechanism (15) without further drive components, such as gear parts, gears, in particular angular gears, or shafts.

14. Work train (100) having a towing machine (3), which comprises a standard rear linkage (32) in the rear attachment space (302), having an agricultural working machine (2), and having an attachment device (1) according to any of the preceding claims, which is attached to the standard rear linkage (32) of the towing machine (3), wherein the agricultural working machine (2) is hitched to the attachment device (1).

## Revendications

1. Dispositif de montage (1) pour être installé à l'espace de montage arrière (302) d'un tracteur (3) qui comporte un dispositif de montage (131) pour installer un mécanisme de levage arrière standard (32) d'un tracteur (3) ainsi que d'une boîte de transfert (15) qui comporte un entraînement (151) pour se raccorder à l'arbre moteur (31) du tracteur (3) et au moins deux sorties d'entraînement (152),
- le dispositif de montage (1) ayant en outre au moins un premier et un second dispositifs d'accrochage (122-123) pour accrocher un dispositif d'attelage standard (20) d'une machine agricole (2) pour le travail sur le champ,
- le dispositif de montage (131) étant orienté dans une première direction (43), et
- les dispositifs d'accrochage (122-123) étant prévus sur un côté respectif du dispositif de montage (131),
- les deux dispositifs d'accrochage (122-123) étant orientés respectivement selon une position inclinée d'un angle (α, 132, 132') tel que 0° < α ≤ 90° par rapport au dispositif de montage (131),
dispositif de montage (1) **caractérisé en ce que**
il est prévu pour accrocher des machines agricoles tractées (2),
- les dispositifs d'accrochage (122-123) comportant respectivement une paire d'éléments d'accrochage (120) en forme de crochets d'arrêt.

2. Dispositif de montage (1) selon la revendication précédente, **caractérisé en ce que**
les angles de positionnement (α, 132, 132') des deux dispositifs d'accrochage (122-123) du dispositif de montage (131) sont identiques.

3. Dispositif de montage (1) selon la revendication précédente, **caractérisé en ce que**
ils sont symétriques-plan.

4. Dispositif de montage (1) selon l'une des revendications précédentes, **caractérisé en ce que**
la boîte de transfert (15) est une transmission T avec deux sorties d'entraînement (152) à angle droit par rapport à l'entraînement (151),
- les deux dispositifs d'accrochage (122-123) étant orientés respectivement suivant un angle de positionnement (α, 132, 132') tel que 45° < α ≤ 90° par rapport au dispositif de montage (131).

5. Dispositif de montage (1) selon la revendication 4,
**caractérisé en ce que**
le premier et le second dispositif d'accrochage (122-123) sont orientés suivant un angle de position droit (α, 132) par rapport au dispositif de montage (131), et
les sorties (152) de la boîte de transfert T (15) sont prévues sur une ligne fictive traversant les dispositifs d'accrochage (122-123).

6. Dispositif de montage (1) selon l'une des revendications précédentes, **caractérisé en ce que**
chacun des dispositifs d'accrochage (122-123) est associé à une sortie d'entraînement (152, 153) de la boîte de transfert (15), pour entraîner un arbre de transmission (204) du dispositif de couplage standard (20), et
- les dispositifs d'accrochage (122-123) ainsi que leur sortie d'entraînement (152) respective sont réalisés respectivement pour être raccordés directement à l'arbre de transmission (204).

7. Dispositif de montage (1) selon l'une des revendications précédentes, **caractérisé en ce que**
le dispositif de montage (1) comporte au moins un troisième dispositif d'accrochage (121) orienté parallèlement au dispositif de montage (131).

8. Dispositif de montage (1) selon la revendication 7,
**caractérisé en ce que**
le troisième dispositif d'accrochage (121) du dispositif de montage (131) est installé en opposition.

9. Dispositif de montage (1) selon l'une des revendications 7-8, **caractérisé en ce que**
tous les dispositifs d'accrochage (121-123) ont respectivement une paire d'éléments d'accrochage (120),
- l'écart (A) des éléments d'accrochage (120) de la paire est réglable.

10. Dispositif de montage (1) selon l'une des revendications 7-9, **caractérisé en ce que**
les dispositifs d'accrochage (120) du troisième dispositif d'accrochage (121) ont un autre écart (A) que les éléments d'accrochage (12) du premier et du second dispositif d'accrochage (122-123).

11. Dispositif de montage (1) selon l'une des revendications précédentes, **caractérisé en ce que**
il comporte des pieds d'appui (14) réglables en hauteur, notamment coulissants, qui sont sur la machine agricole (2), attelée pour déposer le dispositif de montage (1).

12. Dispositif de montage (1) selon l'une des revendications précédentes, **caractérisé en ce que**
il est constitué d'un treillis de poutrelles en forme de tiges ou de tubes (101-105).

13. Dispositif de montage (1) selon l'une des revendications 6 à 12, **caractérisé en ce que**
les dispositifs d'accrochage (121-123) et les sorties d'entraînement (152-153) de la boîte de transfert (15) sont positionnés les uns par rapport aux autres pour que l'attelage de l'arbre de transmission (204) soit possible sans autre composant d'entraînement tel que des parties de transmission, une transmission et notamment un renvoi d'angle ou un arbre pour les sorties d'entraînement (152-153) de la boîte de transfert (15).

14. Train (100) comprenant un tracteur (3) dont l'espace d'attelage arrière (302) a un mécanisme de levage arrière, standard (32), avec une machine agricole (2) et un dispositif de montage (1) selon l'une des revendications précédentes, qui est installée sur le mécanisme de levage arrière standard (32) du tracteur (3),
- la machine agricole (2) étant suspendue au dispositif de montage (1).
